# EUROPEAN PATENT APPLICATION

(11) **EP 4 257 821 A1**
(43) Date of publication of application: **11.10.2023**
(21) Application number: 22167313.0
(22) Date of filing: 08.04.2022
(51) Int. Cl.: F03D 7/02, F03D 80/00, G01V 1/00

(54) **REDUCING SEISMIC LOADS THAT ACT ON A WIND TURBINE**

(71) Applicant: Siemens Gamesa Renewable Energy A/S, 7330 Brande (DK)
(72) Inventor: The designation of the inventor has not yet been filed
(74) Representative: SGRE-Association

(57) **Abstract**

A method of reducing seismic load acting on a wind turbine (100) during a seismic load causing event, wherein the wind turbine (100) comprises a foundation (110), a tower base (112), a tower (120) and a wind rotor (130), which is arranged at a top portion of the tower (120) and which comprises at least one blade (131), the method comprising:
measuring an excitation of the foundation (110), the tower base (112) and/or a proxy thereof;
determining if the measured excitation exceeds an earthquake threshold value (201); and
if the measured excitation exceeds the earthquake threshold value (201), entering an alternate mode of control of the wind turbine (100) for seismic events for reducing the seismic load on the wind turbine (100).

## Description

### Field of invention

The present invention relates to the technical field of wind turbines. The present invention relates in particular to a method for reducing seismic load on a wind turbine by means of an alternate control mode. The present invention further relates to a wind turbine with a seismic control device for reducing seismic load on the wind turbine during a seismic event.

### Art Background

It may be considered as a common practice to establish wind turbines within especially windy environment, e.g. off-shore, in order to yield an efficient power production. However, some of these environments are regions of high seismic activity, for example in the Asia-Pacific region. The response of a wind turbine and its support structure to a seismic event, when there is a certain probability of seismic events, may thus have to be evaluated such that upcoming seismic loads can be determined.

For a typical offshore wind turbine located in the Asia- Pacific region, including Japan, Korea, and Taiwan, the danger of seismic loads may often drive the wind turbine design, since seismic loads can be significantly higher than non-seismic loads for the wind turbine tower and support structure. Accordingly, tower and support structure costs may considerably increase, thus leading to economic infeasibility for a wind turbine project. Further, high seismic loads occurring in the blades or other nacelle components, such as in the rotor nacelle assembly (RNA) may render a prospective site or turbine type technically unfeasible for offshore sites in this region.

When an earthquake occurs, the wind turbine support structure is subjected to seismic accelerations that are transferred through the bedrock and the soil layers (of the ground) to the support structure. One of the most challenging problems with high seismic loads may occur, when the frequency content of these seismic accelerations coincides with one of the structural frequencies of the wind turbine and support structure. This resonance may cause significant vibrations if the input excitation is high enough and hence critical loads in one or more of the turbine structural components (for example, a blade failure).

In order to reduce seismic load on a wind turbine, the conventional approach is to alter the design of the wind turbine support structure, so as to avoid seismic frequencies that may excite turbine structural modes.

However, this approach may have many drawbacks since it produces high additional costs. Further, it may not be used in case seismic frequencies excite RNA structural modes, because RNA redesign is generally not possible for site-specific load calculations.

Another possibility known in the prior art is to idle the turbine, so that the rotor is not rotating anymore. This is normally achieved by modifying the yaw angle of the wind turbine and/or by modifying a blade pitch position.

There may be a need for providing a wind turbine that can be operated in a robust and stable manner even during a seismic event.

### Summary of the Invention

This need may be met by the subject matter according to the independent claims. Advantageous embodiments of the present invention are described by the dependent claims.

According to a first aspect of the present invention, a method of reducing seismic load acting on a wind turbine during a seismic load causing event is described. The wind turbine comprises a tower base, a foundation, a tower and a wind rotor, which is arranged at a top portion of the tower and which comprises at least one blade. The method comprises a first step of measuring an excitation of one of the foundation, the tower base and/or a proxy thereof. In a second step, the method determines if the measured excitation exceeds an earthquake threshold value. If the measured excitation exceeds the earthquake threshold value, the method provides a step for entering an alternate mode of control of the wind turbine for seismic events for reducing the seismic load on the wind turbine.

In the context of the present document, the term "seismic load" may in particular refer to an agitation, in particular a vibration or an oscillation, that is imposed onto the wind turbine in the presence of a seismic load causing event. The seismic load is normally transferred from the ground or the soil around the wind turbine to the wind turbine itself, in particular through its foundation.

In the context of the present document, the term "seismic load causing event" may in particular refer to an event that is associated with a movement of the ground, for example an earthquake. When the seismic event is of a significant strength, it may shake the wind turbine and cause seismic load that leads to damage and failure of the wind turbine.

In the context of the present document, the term "excitation" may refer to the oscillation or vibration amplitude of the foundation of the wind turbine. Such excitation is of a particularly low magnitude, when no seismic load causing events are registered. In this state, the excitation is lower than a predefined threshold, which is called earthquake threshold value in the present application. Such earthquake threshold value may be determined experimentally or through measurements for a region in which the wind turbine is installed or it may be determined through regulatory rules for the region in which the wind turbine is installed.

If the measured excitation exceeds the earthquake threshold value, then an alternate mode of control of the wind turbine for reducing the seismic load acting on the wind turbine during a seismic event is started.

In the context of the present document, the term "proxy" with reference to the foundation and/or the tower base refers to a component, which can provide physical quantities having a correlation with the excitation of the foundation and/or of the tower base. For example, a standard deviation of an active generator power may be considered to be correlated with the excitation of the foundation and/or of the tower base, thus providing an information about such excitation.

In the context of the present document an "alternate mode of control" is a controlling mode of the wind turbine that has the aim of reducing the seismic load on the wind turbine itself.

In particular, the alternate mode of control is configured to provide improved damping, in particular aerodynamic damping, of certain modes of the wind turbine during the seismic event. This may be achieved, for example, by altering at least one resonant frequency of a natural mode of vibration of at least one component of the wind turbine, such as a rotor nacelle assembly or a blade. Due to the improved damping of certain modes of the wind turbine structure, a structural failure of the same due a resonance caused by the seismic load can be better avoided.

According to the present invention, it is therefore possible to actively control the wind turbine during a seismic event without the need of idling the wind turbine or of substantially modifying the design of the wind turbine.

According to an embodiment, the measured excitation can be processed by means of signal processing techniques to filter out noise and/or excitation caused by the wind and/or the waves at low frequencies and obtain only excitations caused by the seismic event at higher frequencies.

According to an embodiment of the method, the excitation is determined on the basis of at least one parameter. Such parameter may be a linear and/or angular displacement, a linear and/or angular acceleration or a linear and/or angular velocity of the foundation. In the context of the present document, the term "linear" in connection with displacement, velocity and acceleration refers to a translational displacement, velocity and acceleration. Both terms can be used interchangeably.

Determining the above mentioned parameters for the foundation of the wind turbine is an easy way and straightforward to have a direct correlation with the excitation of the foundation and thus determine if an excitation above an earthquake threshold value is reached.

According to an embodiment, the excitation is measured by means of a sensor. The sensor can be a gyroscope and/or an accelerometer. In particular, the sensor may be used to measure the parameter correlating with the excitation. Preferably, the sensor is placed on, in or in direct contact with the foundation of the wind turbine, in order to directly measure a parameter correlated to the excitation of the same. The sensor can also be placed otherwise in the wind turbine, such as in and/or at the rotor nacelle assembly and/or in the tower base.

For example, it is possible to use an accelerometer to measure an acceleration of the foundation, which is then used to determine the excitation of the same.

It is also possible to use a gyroscope to measure an angular velocity and/or acceleration of the foundation, which is then used to determine the excitation of the same.

Another possibility is to use a displacement sensor, such as an extensometer, which is configured to measure a linear and/or angular displacement of the foundation, which is then used to determine the excitation of the same.

Yet another possibility is to use load cell and/or a strain gauge measuring a load. The signal related to the measured load can then be filtered, for example by means of a high pass and/or a band pass filter, to remove the load caused by the wind and/or the waves at low frequencies.

Other possible sensors that may be used comprise, for example, a velometer, a strain gauge, a load cell, a laser measurement system and/or an optical measurement system.

According to another embodiment, there is a plurality of sensors provided to measure at least one parameter, on which basis the excitation is determined. In such a way it is possible to measure the at least one parameter at different places, so to improve the measurement and thus the determination of the excitation. In particular, the plurality of sensors is located on, in or in direct contact with the foundation.

It is also possible, that the plurality of sensors is configured to measure different parameters, such as a translational displacement and a linear acceleration, so that the excitation is determined on the base of multiple parameters.

Generally speaking, increasing the number of sensors and the type of measured parameters improves the robustness and the reliability of the measurement and, therefore, the determination whether the earthquake threshold value is reached and the alternate mode of control must be entered.

It is also possible, that a soil based sensor external to the wind turbine is used to measure the excitation.

In the context of the present invention, the term "soil based sensor" refers to a sensor, which is placed into the soil or ground and which is not a component belonging to the turbine tower and/or to other wind turbine parts. Such soil based sensor can measure the excitation of the foundation, of the tower base and/or of the proxy thereof and then transmit the measured excitation either via a wired or via a wireless connection to a seismic event control device of the wind turbine. In such a configuration, the wind turbine therefore comprises a soil based sensor and a seismic event control device, wherein the soil based sensor measures the excitation and transfers then the measured excitation to the seismic event control device for evaluation and, if the measured excitation exceeds the earthquake threshold value and, in such a case, for entering the alternate mode of control of the wind turbine.

According to an embodiment, during the alternate mode of control at least one of the following actions is performed:
actuating at least one blade of the rotor to modify its pitch position and/or actuate at least one active aerodynamic addon, preferably a flap or spoiler, and/or
adjusting the yaw angle of the rotor with respect to the wind direction an/or earthquake motion direction.

In the context of the present document, the term "blade pitch position" may in particular refer to a "blade pitch angle". The definition of a blade pitch angle is well-known in the field of wind turbines as the angle between the chord line of the blade and the rotational plane of the blade (reference line on the rotor hub). In other words, the blade pitch angle is the angle at which a turbine blade is set with respect to the plane of rotation, i.e. the angle being measured between the rotational plane and a straight line (chord line) from one edge of the blade to the other. This chord line is an imaginary straight line joining the leading edge and trailing edge of the blade. The pitch actuation may be for example a hydraulic or an electrical pitch actuation.

The modification of a blade pitch position may be used to modify the turbine natural frequencies and add frequency separation between natural modes of vibration. Static activation of aerodynamic add-ons could be used to put the turbine in a higher aerodynamic damping state. Dynamic activation of aerodynamic add-ons could be used to provide a damping force out of phase with seismic base excitation.

The adjustment of the yaw angle is achieved by rotating the rotor in or out of the wind. By adjusting the yaw angle better aerodynamics and/or aeroservoelastic damping properties of the rotor can be achieved, thus mitigating the seismic load of the seismic load causing event. The yaw angle in relation to the seismic excitation direction is also an important parameter to consider.

According to an embodiment, during the alternate mode of control the stiffness of a blade pitch actuator is altered or the blade pitch actuator is disconnected by means of active components, such as explosive bolts.

Altering the stiffness of the blade pitch actuator directly influences the dynamic properties of the whole structure, thus allowing an out-phasing of the oscillations experienced by the wind turbine from the excitation caused by the seismic load causing event.

By disconnecting the blade pitch actuator it is possible to partially decouple part of the rotor, thus reducing the risk of extended damage to the whole wind turbine.

According to an embodiment, during the alternate mode of control, entering of an idle mode of the wind turbine is delayed until the measured excitation falls below a normal operation threshold value. Alternatively, it may also be possible, that during the alternate mode of control a rotation speed of the wind turbine is reduced.

In the context of the present document, the term "normal operation" may refer to the operation of the wind turbine when the measured excitation does not exceed the earthquake threshold value. The term "power production operation mode" is used in an equivalent manner to the term "normal operation".

In the context of the present document, the term "idle mode" may refer to a control mode of the wind turbine during which the rotor blades are set into the wind so that no power is produced. Such idle mode is normally entered when the wind speed in the region of the wind turbine drops below a certain minimum value and/or exceeds a maximum value, as a too low or a too high wind speed may either not be profitable for operating the wind turbine or might expose the rotor to excessive aerodynamic forces, which might damage the rotor and the wind turbine.

During a seismic event, however, the aerodynamic forces can provide a natural damping force for the frequencies content of the seismic event. To prevent excessive aerodynamic forces acting on the rotor, the blade pitch position and/or the yaw angle can be altered.

The normal operation threshold value is a value under which no seismic event is detected. Such threshold value might be equal to the earthquake threshold value. It might however also be smaller than the earthquake threshold value.

When the measured excitation drops below the normal operation threshold, the idle mode is entered, if the wind speed is lower than a minimum value or higher than a maximum value. If the wind speed is between the minimum value and the higher value, then the power production operation mode might be resumed.

By reducing the rotation speed of the wind rotor it is possible to achieve a damping effect by acting on the eigenfrequencies of the wind turbine.

According to an embodiment, the wind turbine comprises a rotor nacelle. During the alternate mode of control a fluid tank placed in the rotor nacelle is filled or drained.

In the context of the present invention, the term "rotor nacelle" may refer to a housing that houses generating components in the wind turbine, such as a generator, a gearbox, a drive train, a brake assembly and the like.

The fluid tank of a nacelle or tower mounted slosher damper may be filled or drained by using a pumping system known in the art.

By filling or draining the fluid tank of the nacelle or of the tower slosher the dynamic properties of the nacelle or of the tower slosher damper can be altered to better damp frequencies relevant to a seismic event. Furthermore, in some cases the eigenfrequencies of the wind turbine can be altered, so that frequency separation between the earthquake frequencies and the eigenfrequencies, and thus the resonation frequencies, is increased and the damage to the wind turbine is limited. Draining the fluid tank increases the eigenfrequencies and filling the fluid tank reduces the eigenfrequencies.

When the measured excitation drops below a normal operation threshold, the fluid tank of the rotor nacelle or of the tower slosher is filled or drained to achieve the pre-seismic event turbine properties.

According to an embodiment, the wind turbine comprises a ballast mass. During the alternate mode of control the mass ballast is moved in a plane perpendicular to a central axis of the wind turbine and/or the mass ballast is lifted or lowered with respect to the foundation.

By moving the ballast mass on a plane perpendicular to the central axis of the wind turbine, the separation between the eigenfrequencies of the blade bending modes and the seismic excitation frequency is increased.

By lifting or lowering the mass ballast with respect to the foundation, the eigenfrequencies of the turbine tower are modified and brought out of phase with the excitation frequencies caused by the seismic load causing event.

According to an embodiment, during the alternate mode of control the gain and/or phase of a drive train damper is modified.

By modifying the gain and/or phase of the drive train damper, the turbine tower top motion can be damped out more aggressively than during normal operation.

According to an embodiment, the wind turbine comprises at least one passive damper system. During the alternate mode of control the damping properties of the passive damper system are modified.

By modifying the damping properties of the passive damper system, different frequency bands can be targeted, thus altering the response of the wind turbine to the excitation frequencies caused by the seismic load causing event.

According to an embodiment, the damping properties of the passive damper system are modified by adjusting a fluid level of a slosher damper and/or an opening valve size in a hydraulic piston damper.

The above described slosher damper and hydraulic piston damper are well known in the art and can be easily integrated in the wind turbine, thus providing a well known solution for operating the wind turbine during a seismic event.

According to an embodiment, a generator of the wind turbine is used to turn the wind rotor during the alternate mode of control. According to this embodiment, it is possible to thus damp the effects of the seismic event by rotating the wind rotor.

According to an embodiment, the tension of the blade and/or of a tower internal cable is modified during the alternate mode of control. According to this embodiment, it is possible to act on the stiffness of the wind turbine, thus modifying its damping behavior.

According to an embodiment, during the alternate mode of control, if the measured excitation is lower than a normal operation threshold value, then a tower inclination angle is determined. After determining the tower inclination angle, a difference between the tower inclination angle and a standard tower inclination angle is computed. If such difference is lower than a threshold, the alternate mode of control is exited and a power production operation mode of the wind turbine is entered.

In the present document, the term "tower inclination angle" refers to an angle between the ground, on which the wind tower is installed, and a central vertical axis of the wind turbine.

In the present application, the term "standard tower inclination angle" is referred to a tower inclination angle measured before the seismic event. It is a reference value, to which the tower inclination angle measured during the method is compared to.

The tower inclination angle is measured and a difference between the tower inclination angle as measured and a reference tower inclination angle is determined, thus assessing if the seismic event has provoked significant damages to the structure of the wind turbine.

The difference is determined as absolute value without a positive or negative sign in front of it.

Thus, when the seismic event is passed, the wind turbine is returned to normal operation and power can be produced, if the damage caused by the seismic event and assessed through the tower inclination angle is of minor relevance.

According to a second aspect of the invention, a wind turbine is provided. The wind turbine comprises a tower base, a foundation, a tower, a wind rotor, which is arranged at a top portion of the tower and which comprises at least one blade, an excitation measuring device configured to measure an excitation of the foundation, of the tower base and/or of a proxy thereof, and a seismic event control device, configured to operate the wind turbine in an alternate mode of control when the measured excitation exceeds a threshold value.

In the context of the present document, the term "excitation measuring device" may in particular refer to any device which can measure, either directly or indirectly, the excitation of the foundation. In particular, the excitation measuring device can be a sensor, preferably an extensometer, an accelerometer or a gyroscope.

In the context of the present document, the term "seismic event control device" may in particular refer to any device that is configured to actively perform any of the method steps described above, which are related to the alternate mode of control. A seismic event control device may be a processor or a plurality of processors. Further, a seismic event control device may be for example a control system of a wind turbine or a software implemented on a wind turbine control system. In a specific example, no hardware is added to an existing wind turbine and a seismic event control software is implemented on the wind turbine control device (controller), which then becomes (at least partially) a seismic event control device.

It is noted, that the wind turbine according to the second aspect of the present invention may include any of the features disclosed in the method according to the first aspect of the invention and that, vice versa, the method according to the first aspect of the invention may include any of the features disclosed in the wind turbine according to the second aspect of the invention.

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.

### Brief Description of the Drawings

- Figure 1: shows a wind turbine in accordance with an exemplary embodiment of the present invention.
- Figure 2: shows a diagram plotting the mean wind speed against the linear acceleration of the foundation as measured by the excitation measuring device.
- Figure 3: shows a diagram plotting the mean wind speed against the load measured at a blade during normal operation, during a seismic event with the wind turbine operating in an alternate mode of control.
- Figure 4: shows a diagram to illustrate the method of reducing seismic load acting on a wind turbine according to an exemplary embodiment of the invention.

### Detailed Description

The illustration in the drawing is schematic. It is noted that in different figures, similar or identical elements or features are provided with the same reference signs or with reference signs, which are different from the corresponding reference signs only within the first digit. In order to avoid unnecessary repetitions elements or features which have already been elucidated with respect to a previously described embodiment are not elucidated again at a later position of the description.

Further, spatially relative terms, such as "front" and "back", "above" and "below", "left" and "right", et cetera are used to describe an element's relationship to another element(s) as illustrated in the figures. Thus, the spatially relative terms may apply to orientations in use which differ from the orientation depicted in the figures. Obviously all such spatially relative terms refer to the orientation shown in the figures only for ease of description and are not necessarily limiting as an apparatus according to an embodiment of the invention can assume orientations different than those illustrated in the figures when in use.

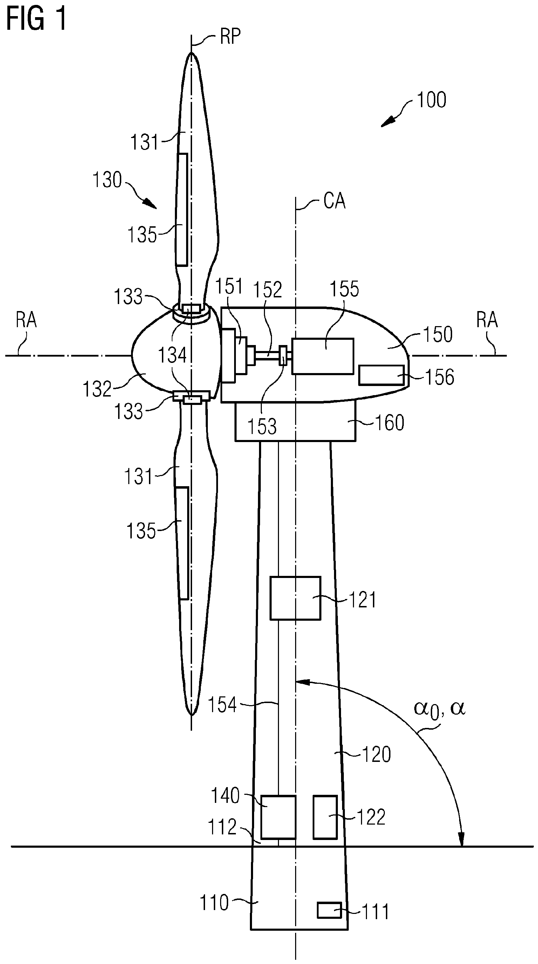

**Figure 1** shows a wind turbine 100 according to an embodiment of the invention. The wind turbine 100 comprises a tower 120 which is mounted on a foundation 110. A tower base 112 is arranged above the foundation 110 and connects the tower 120 with the foundation. The foundation 110 is placed in the ground or soil. The wind turbine 100 can be located either onshore or offshore.

The foundation 110 comprises an excitation measuring device 111, which is configured to measure at least one parameter, on which basis an excitation can be determined. For example, the excitation measuring device 111 can be a sensor, in particular an accelerometer, a gyroscope or a extensometer which is configured to measure a linear acceleration, an angular velocity and/or acceleration or a linear and/or angular displacement caused by excitation frequencies. The excitation measuring device 111 may also comprise more than one sensor and the plurality of sensors might be placed at different locations in, at, on or in contact with the foundation 110.

The tower 120 comprises a ballast mass 121. The ballast mass 121 can be moved in a plane perpendicular to the central vertical axis CA of the wind turbine. Also, the ballast mass 121 can be lifted or lowered with respect to the foundation 110. The means for moving, lifting and lowering the ballast mass are known in the art and are not shown in Figure 1.

The tower 120 comprises also a passive damper system 122, whose damping properties can be altered during the operation of the wind turbine 100. The passive damper system 122 is for example a slosher damper, whose fluid level can be adjusted by means of a pumping system, or a hydraulic piston damper, which can be filled or drained via an orifice.

The tower 120 also comprises an internal support cable 154, whose tension can be modified in order to alter the damping effect of the tower.

On top of the tower 120 there is arranged a nacelle 150. In between the tower 120 and the nacelle 150 there is provided a yaw angle adjustment device 160 which is capable of rotating the nacelle 150 around a central vertical axis CA being aligned with the longitudinal extension of the tower 120. By controlling the yaw angle adjustment device 160 in an appropriate manner it can be made sure that during a normal operation of the wind turbine 100 the nacelle 150 is always properly aligned with the current wind direction.

The wind turbine 100 further comprises a wind rotor 130 having three blades 131. In the perspective of Figure 1 only two blades 131 are visible. The rotor 130 is rotatable around a rotational axis RA. The blades 131, which are mounted at a hub 132, extend radially with respect to the rotational axis RA and rotate within the rotational plane RP. Each blade 131 comprises aerodynamic addons 135, in particular flaps or spoilers, which are configured to modify, when activated, the aerodynamic and/or aeroelastic properties of the blade 131.

In between the hub 132 and a blade 131 there is respectively provided a blade pitch angle adjustment device 133, also referred to as blade pitch actuator, in order to adjust the blade pitch position, in particular the blade pitch angle of each blade 131 by rotating the respective blade 131 around an axis being aligned substantially parallel with the longitudinal extension of the respective blade 131. By controlling the blade pitch angle adjustment device 133, the blade pitch angle of the respective blade 131 can be adjusted in such a manner that, at least when the wind is not too strong, a maximum wind power can be retrieved from the available mechanical power of the wind driving the wind rotor 130.

Active means 134 are provided in the blade pitch angle adjustment device 133 comprises an active component 134, which is used to either alter the stiffness of the blade pitch adjustment device 133 or to disconnect it. Preferably, the active component 134 comprises or consists of an explosive bolt.

As can be seen from Figure 1, within the nacelle 150 there is provided a drive train 151. The drive train 151 is used to convert the number of revolutions of the rotor 130 into a higher number of revolutions of a shaft 152, which is coupled in a known manner to an electromechanical transducer 155. The electromechanical transducer is a generator 155. At this point it is pointed out that the drive train 151 is optional and that the generator 155 may also be directly coupled to the rotor 130 by the shaft 152 without changing the numbers of revolutions. In this case the wind turbine is a so called Direct Drive (DD) wind turbine.

Further, a brake 153 is provided in order to safely stop the operation of the wind turbine 100 or the rotor 130 for instance in case of emergency.

Further, the nacelle 150 comprises a fluid tank 156, which can be filled or drained via a pumping system (not shown) to alter the eigenfrequencies of the nacelle 150 and, therefore, the oscillation behavior of the top of the wind turbine 110.

The wind turbine 100 further comprises a control system for operating the wind turbine 100 in a highly efficient manner. Apart from controlling for instance the yaw angle adjustment device 160, the control system is also used for adjusting the blade pitch angle of the rotor blades 131 using actuators 133. On top of that, the control system is also configured to control the active component 134, a drive train damper, the fluid tank 156, the ballast mass 121 and the passive damper 122.

The control system includes a seismic event control device 140 configured to measure the excitation of the foundation 110 and/or of the tower base and/or of a proxy thereof and to actuate any of the above mentioned components, and thus to operate the wind turbine 100 in an alternate mode of control, if an excitation, as measured or determined from the excitation measuring device 111 exceeds an earthquake threshold value 201.

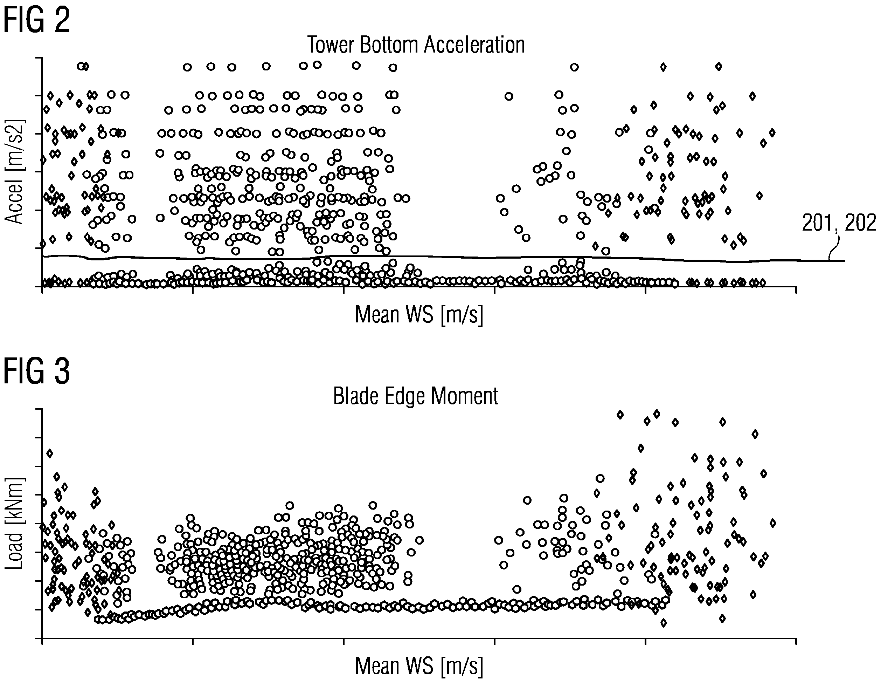

**Figure 2** shows a diagram plotting the mean wind speed against the linear acceleration of the foundation 110 as measured by the excitation measuring device.

The rhombic symbols represent the data collected during an idle mode of the wind turbine 100. The circular symbols represent the data collected during a normal operation mode. During the normal operation of the wind turbine 100 the measured excitation, in this case a linear acceleration of the foundation 110, always remains lower than the earthquake threshold value 201.

If the excitation is higher than the earthquake threshold value 201, then a seismic event is detected and an alternate mode of control of the wind turbine 100 is activated. The rounded symbols represent the case in which an alternate mode of control of the wind turbine 100 is activated during the seismic event.

**Figure 3** shows a diagram plotting the mean wind speed against the load measured at a blade 131 during an idle operation mode (rhombic symbols) and during a normal operation mode, either during a seismic event or not during a seismic event (circular symbols).

As it is clear form Figure 3, the load measured at a blade 131 during a seismic event is lower if the wind turbine 100 is operating in an alternate control mode.

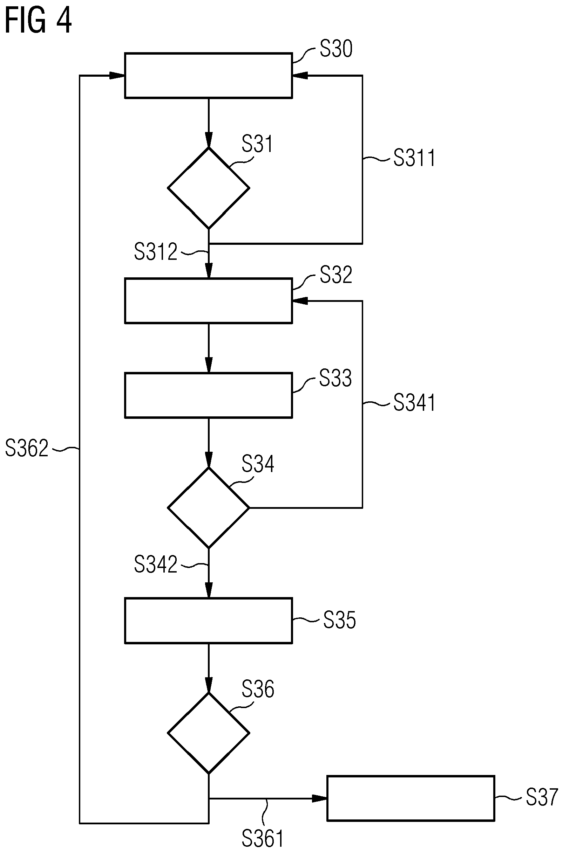

**Figure 4** shows schematically a method according to the present invention.

In a first step S30, an excitation of the foundation 110 or of the tower 112 is measured. The excitation might be determined on the basis of a linear and/or angular displacement, a linear and/or angular velocity and/or a linear and/or angular acceleration of the foundation 110. To measure the excitation of the foundation 110, the excitation measuring device 111 is used.

The measured excitation of the foundation can be processed by using signal processing techniques known in the art, such as filtering or operational modal analysis. For example, the measured excitation can be subjected to a high pass or to a band pass filter for filtering out excitation at lower frequencies, which may be resulting from noise, wind load or wave loads. By applying signal processing techniques it is therefore possible to focus at excitations having higher frequencies typical of a seismic event.

The measured excitation is then compared with an earthquake threshold value (step S31). If the measured excitation is higher than the earthquake threshold value 201, then a seismic load causing event is detected and the seismic event control device 140 proceeds to enter an alternate mode of control of the wind turbine 100 (steps S312, S32). If, on the other hand, the measured excitation is lower than the earthquake threshold value 201, the method proceeds back to step S30, that is to measuring the excitation of the foundation 110 or of the tower base 112.

In the alternate mode of control, the seismic event control device 140 provides to modify the behavior of the wind turbine according to any possible embodiment of the method claims.

During the alternate mode of control, the excitation is continuously monitored (step S33) and it is compared with a normal operation threshold value 202 (step S34). If the measured excitation does not fall below the normal operation threshold value 202, then the wind turbine 100 is kept in alternate mode of control (steps S341, S32).

If, on the contrary, the measured excitation falls below the normal operation threshold value 202, then the method proceeds to step S342, S35. In step S35 the seismic event control device 140 measures a tower inclination angle α, which is defined as the angle between the ground, on which the wind tower is installed, and the central vertical axis of the wind turbine CA. The tower inclination angle α can be for example measured by means of an optical sensor.

In step S36, the absolute difference between a difference between the tower inclination angle α and a standard tower inclination angle α₀ is computed and is compared with a reference threshold value (step S36). The standard tower inclination angle α₀ can be a reference value saved in the seismic event control device 140.

If the absolute value of the difference between the standard tower inclination angle α and the standard tower inclination angle α₀ is lower than a predefined threshold, then the seismic event control device 140 proceeds to exit the alternate mode of control and the wind turbine 100 resumes the normal operation and enters a power production operation mode or an idle mode (step S362) and the method proceeds back to step S30.

If, on the contrary, the absolute value of the difference between the standard tower inclination angle α and the standard tower inclination angle α₀ is higher than the predefined threshold, then the wind turbine 100 is stopped and an operator of the wind turbine 100 is warned, that the wind turbine 100 has undergone major damages during the seismic event (steps S361 and S37).

It should be noted that the term "comprising" does not exclude other elements or steps and the use of articles "a" or "an" does not exclude a plurality. Also elements described in association with different embodiments may be combined. It should also be noted that reference signs in the claims should not be construed as limiting the scope of the claims.

## Claims

1. A method of reducing seismic load acting on a wind turbine (100) during a seismic load causing event, wherein the wind turbine (100) comprises a foundation (110), a tower base (112), a tower (120) and a wind rotor (130), which is arranged at a top portion of the tower (120) and which comprises at least one blade (131), the method comprising:
measuring an excitation of the foundation (110), the tower base (112) and/or a proxy thereof;
determining if the measured excitation exceeds an earthquake threshold value (201); and
if the measured excitation exceeds the earthquake threshold value (201), entering an alternate mode of control of the wind turbine (100) for seismic events for reducing the seismic load on the wind turbine (100).

2. The method according to claim 1, wherein the excitation is determined on the basis of at least one of the following parameters:
a linear and/or angular displacement,
a linear and/or angular acceleration, and
a linear and/or angular velocity
of the foundation (110) and/or of the tower base and/or of the tower (120).

3. The method according to claim 1 or 2, wherein the excitation is measured by means of a sensor (111), in particular by means of a gyroscope, an accelerometer, a velometer, a strain gauge, a load cell, a laser measurement system, an optical measurement system and/or a soil based sensor external to the wind turbine.

4. The method according to any of the preceding claims, wherein during the alternate mode of control at least one of the following actions is performed:
actuating at least one blade (131) of the rotor to modify its pitch position and/or actuate at least one active aerodynamic addon (135), preferably a flap or spoiler, and/or
adjusting the yaw angle of the rotor (130) with respect to the wind direction and/or earthquake motion direction.

5. The method according to any of the preceding claims, wherein during the alternate mode of control the following action is performed:
altering the stiffness of a blade pitch actuator (133) or disconnecting the blade pitch actuator (133) by means of active components (134), such as explosive bolts.

6. The method according to any of the preceding claims, wherein, during the alternate mode of control, at least one of the following action is performed:
entering of an idle mode of the wind turbine (130) is delayed until the measured excitation falls below a normal operation threshold value (202); and
reducing a rotation speed of the wind turbine (130).

7. The method according to any of the preceding claims, wherein the wind turbine (100) comprises a rotor nacelle (150) and wherein during the alternate mode of control the following action is performed:
draining or filling a fluid tank (156) placed in the rotor nacelle (150).

8. The method according to any of the preceding claims, wherein the wind turbine (100) comprises a ballast mass (121) and wherein during the alternate mode of control at least one of the following actions is performed:
moving the ballast mass (121) in a plane perpendicular to a central axis (CA) of the wind turbine, and
lifting or lowering the mass ballast (121) with respect to the foundation (110).

9. The method according to any of the preceding claims,
wherein during the alternate mode of control the gain and/or phase of a drive train damper is modified.

10. The method according to any of the preceding claims,
wherein the wind turbine (100) comprises at least one passive damper system (122) and
wherein during the alternate mode of control the damping properties of the passive damper system (122) are modified.

11. The method according to claim 10, wherein the damping properties of the passive damper system (122) are modified by adjusting a fluid level of a slosher damper and/or opening or closing a valve or adjusting an orifice in a hydraulic piston damper.

12. The method according to any of the preceding claims, wherein during the alternate mode of control a generator (155) of the wind turbine (100) is used to turn the wind rotor (130).

13. The method according to any of the previous claims, wherein during the alternate mode of control the tension of a blade support cable (130) and/or of a tower internal support cable (154) is modified.

14. The method according to any of the preceding claims, wherein the method further comprises:
determining, during the alternate mode of control, if the measured excitation is lower than a normal operation threshold value (202);
if the measured excitation is lower than a normal operation threshold value (202) determine a tower inclination angle (α); and
if the difference between the tower inclination angle (α) with a standard tower inclination angle (α₀) is lower than a threshold value:
exiting the alternate mode of control and entering a power production operation mode of the wind turbine (100).

15. A wind turbine (100) comprising:
a foundation (110);
a tower base (112)
a tower (120);
a wind rotor (130), which is arranged at a top portion of the tower (120) and which comprises at least one blade (131);
an excitation measuring device (111) configured to measure an excitation of the foundation, of the tower base and/or a proxy thereof;
a seismic event control device (140), configured to operate the wind turbine (100) in an alternate mode of control when the measured excitation exceeds a threshold value (201).
